# EUROPEAN PATENT SPECIFICATION

(11) **EP 2 700 134 B1**
(45) Date of publication and mention of the grant of the patent: **03.10.2018**
(21) Application number: 12706737.9
(22) Date of filing: 07.02.2012
(51) Int. Cl.: H02G 1/08

(54) **DIVIDED CONDUIT AND PROCESS FOR FORMING**
GETEILTE LEITUNG UND VERFAHREN ZUR HERSTELLUNG
CONDUIT DIVISÉ ET PROCÉDÉ DE FORMATION DE CE CONDUIT

(30) Priority: 18.04.2011 US 201113088837; 18.04.2011 US 201113088859
(43) Date of publication of application: 26.02.2014
(73) Proprietor: Milliken & Company, Spartanburg, South Carolina 29303 (US)
(72) Inventor: HEPFINGER, John M., Newnan, Georgia 30265 (US); ZEILER, Bernhard, Moore, South Carolina 29369 (US)
(74) Representative: Hoffmann Eitle
(86) International application number: PCT/US2012/024053
(87) International publication number: WO 2012/145055

(56) References cited:
- EP-A1- 1 087 488
- EP-A2- 1 039 201
- WO-A1-00/79662
- WO-A2-2012/074585
- JP-A- H10 110 465
- KR-B1- 100 959 242
- US-A- 3 911 200
- US-A- 4 707 074
- US-A1- 2002 036 019

## Description

### TECHNICAL FIELD

The present disclosure generally relates to divided conduits into which cables, such as fiber optic cables, coaxial cables, electrical cables, electrical wiring, and the like, may be positioned. More particularly, the present disclosure relates to divided conduits having a strip-shaped substrate attached to the conduit on its longitudinal edges separating the conduit into two or more longitudinal channels.

The present disclosure also relates to processes to form divided conduits into which cables, such as fiber optic cables, coaxial cables, and the like, may be positioned. More particularly, the present disclosure relates to processes to form divided conduits having a strip-shaped substrate attached to the conduit on its longitudinal edges separating the conduit into two or more longitudinal channels.

### BACKGROUND

Cable, such as fiber optic communication cable, is often provided underground in great lengths, and may even extend for many miles. It is known in the art to bury the cable in the ground so that the area above-ground is not cluttered with the cable and its respective support apparatus. Furthermore, by positioning the cable underground, it is more protected from the weather and other potentially damaging circumstances.

It is also known in the cable art to position the cable within a conduit in order to more fully protect the cable during in-ground installations. The conduit, which is often formed from lengths of polyvinyl chloride tubing, polyethylene tubing or the like, is laid in the ground, after which a rope is placed in the conduit either by blowing or rodding. The rope, in turn, is attached to one of the communication cables. By pulling the rope from one end of the conduit, the cable is drawn through the conduit into position. Once placed within the conduit, the cable is protected from damage which may be caused by weather, water, and the like.

When a conduit is in place, it may be subsequently desired to run a second communications cable at the same location. As such, it would be desirable from a cost and time standpoint to make use of the dead space within an existing conduit, rather than lay a new length of conduit. However, it has been found that it is difficult to merely insert a second cable into a conduit that already contains a first cable. When a rope is blown or "snaked" into a conduit already containing a cable (or when a second cable is "snaked" through a conduit with a pre-laid cable), the rope (or cable) is often impeded by the first cable. In such cases, the rope (or second cable) becomes tangled with, or twisted around, the first cable, causing damage to the cables.

It has been suggested to provide a divider to be inserted into a conduit in order to separate the conduit into discrete sections, thus making insertion of the second cable easier. A problem has been encountered in that when conduit is placed over long distances, undulations will invariably occur therein. Also, planned curves, such as at underpasses or the like, will often be encountered rendering the placement of known dividers therein difficult, if not impossible.

A need exists, therefore, for a device to separate or partition a conduit, such as an underground communication cable conduit, into discrete sections. A need also exists for a partitioning device which will provide for improved use of the space within a conduit. US2002/0036019 A1, on which the preambles of the independent claims are based, discloses a divider for being inserted or pulled into a conduit. Documents WO 00/79662, KR-B1-100959242, EP-A1-1 087 488, US 3,911,200, and JP-A1-H10110465 also form part of the prior art.

### BRIEF SUMMARY

The present invention provides a divided conduit as recited in claim 1, and a method of producing a divided conduit as recited in claim 6 or in claim 11.

Provided is a divided conduit containing a thermoplastic conduit and at least one strip-shaped substrate. The strip-shaped substrate may be a strip-shaped textile or a strip-shaped film and has a first longitudinal edge and a second longitudinal edge which are embedded into the thermoplastic material of the thermoplastic conduit and resides within the inner surface of the conduit forming at least two flexible, longitudinal channels for enveloping cables or other elongated structures.

Also provided is a method of producing a divided conduit comprising forming a strip-shaped substrate having a first longitudinal edge and a second longitudinal edge. The strip-shaped substrate is a strip-shaped textile or a strip-shaped film. Then extruding a molten thermoplastic into the form of a conduit and placing the one strip-shaped substrate within the extruded conduit during or directly after conduit formation. The first longitudinal edge and the second longitudinal edge of the strip-shaped substrate embed into the thermoplastic material of the thermoplastic conduit and resides within the inner surface of the conduit. Also disclosed is a process to form the divided conduit by co-extruding the strip-shaped film and the conduit simultaneously.

### BRIEF DESCRIPTION OF THE DRAWINGS

An exemplary embodiment of the present invention will now be described by way of example, with reference to the accompanying drawings, wherein:
Figure 1 is an illustration of one embodiment of the invention having one strip-shaped substrate forming two channels.
Figure 2 is an illustration of one embodiment of the invention having two strip-shaped substrates forming three channels.
Figure 3 is an illustration of one embodiment of the invention having one strip-shaped substrate forming three channels.
Figure 4 is an illustration of one embodiment of the invention having one strip-shaped substrate forming two channels, where the strip-shaped substrate is moved towards the inner surface of the conduit.
Figure 5 is an illustration of one embodiment of the invention having two strip-shaped substrates forming five channels.

### DETAILED DESCRIPTION

The divided conduits described herein are readily manufactured. Each divided conduit provides a structure that allows cables to be pulled through without snagging or excessive heat build-up due to friction. In addition, the divided conduits do not allow contact or alternation losses between adjacent cables in other channels of the conduit.

The term "strip-shaped substrate" refers to a long strip of flexible material made of any suitable material such a textile or film. The term "longitudinal edges" refers to the edges along the length of the strip-shaped substrate. The term "longitudinal axis" refers to the axis of the strip-shaped substrate along its length. "Integral", in this application, means that two of more materials are connected with each other without the further use of any glues or adhesives. The divided conduit may be considered to be integral.

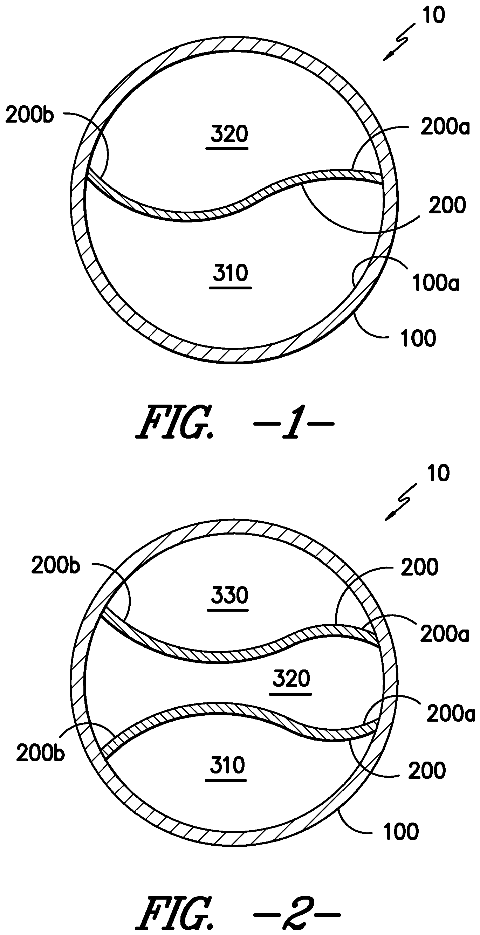

Referring now to Figure 1, there is shown one embodiment of the divided conduit 10. In Figure 1, the conduit 100 contains one strip-shaped substrate 200. The strip-shaped substrate 200 has two longitudinal edges, a first longitudinal edge 200a and a second longitudinal edge 200b, both of which are adhered to and embedded into the inner surface 100a of the conduit 100. This forms two channels 310 and 320 where cables or other elongated structures may be placed. The cables or other elongated structures may be placed into the channels during the formation of the divided conduit, after the conduit is formed, or after the conduit is installed. The divided conduit formed is flexible and a lower weight then some alternative technologies.

The conduit 10 (also sometimes referred to as a pipe or tube), may be any suitable conduit formed from an extrudable material such as a thermoplastic. The conduit may have any suitable wall thickness, inner diameter, and outer diameter. Conduits for use in the fiber optic field tend to have an inner diameter of about 12mm to 50mm. In other embodiments, the conduit may have a very large inner diameter, for example from about 100mm to 150mm, or may have a very small diameter such as less than about 50 mm. The conduit is preferably flexible. In one embodiment, the conduit is formed from a polymer selected form the group consisting of polyethylene, polypropylene, polyester, and polyvinyl chloride. The conduit may contain a bumpy finish to reduce the amount of contact the film has with the cable, pull line, or other elongated structure. In one embodiment, the inner or outer surface of the conduit has a textured surface. One example of a textured surface is an "orange peel" finish, where the texture resembles the bumpy surface of the skin of an orange (fruit). This textured surface may serve to reduce the coefficient of friction and allow for easier insertion of cables or other elongated structures. The conduit may be smooth-wall, corrugated, or the like.

The strip-shaped substrate 200 may be formed of any suitable material. The strip-shaped substrate should be flexible, have a low coefficient of friction to avoid cable damage and preferably have a high strength to avoid tearing during cable installation. In one embodiment, the strip-shaped substrate should be able to withstand the extrusion temperatures of the thermoplastic polymer used to form the conduit.

Preferably, the coefficient of friction for the strip-shaped substrate (dynamic or sliding coefficients of friction) are between about 0.06 to about 0.14, and a narrower range of about 0.08 to about 0.13, may also be used. In one embodiment, the breaking tensile strength of the present fabric is in the range of from about 45 kg/cm to about 70 kg/cm. In another embodiment, the elongation percentages of the strip-shaped substrate are between 2% and 5% at 22.5 kg of force and between 5% and 10% at 45.5. Kg of force. The strip-shaped substrate preferably has a thickness of about 0.025 inches to 0.100 inches. The strip-shaped substrate preferably has a breaking strength of about 200 lbs/cm to 600 lbs/cm. The strip-shaped substrate preferably has air permeability of 10 cm³/cm²/s to 70 cm³/cm²/s. Preferably the strip-shaped substrate has a rigidity of between about 100 and 400 grams force as measured by ASTM D6827.

In one embodiment, the strip-shaped substrate 200 is a strip-shaped textile. The strip-shaped textile used may be any suitable textile, but is preferably one that is flexible, has a low coefficient of friction, and a high tensile strength. The textile may be a knit, woven, non-woven, or unidirectional. The strip-shaped textile may have additional function chemistries such as low friction, fire resistance, adhesion, or color added. The chemistries may be added to the yarns during yarn formation or applied onto the yarns before or after textile formation. In one embodiment, the textile has a weight of about 2 to 20 ounces per yard and in another embodiment has a weight of about 10 to 12 ounces per yard. The space between the yarns within the textile will aid in breathability of the textile and the flexibility of the divided conduit. Further, having these shapes should allow for easier movement of the strip-shaped textile within the divided conduit to change the size of the channels and make it easier to install cables in between empty channels.

In one embodiment, the strip-shaped textile is a woven textile. The fabric base may also be, for example, plain, satin, twill, basket-weave, poplin, jacquard, and crepe weave textiles. Preferably, the woven textile is a plain weave textile. It has been shown that a plain weave has good abrasion and wear characteristics. A twill weave has been shown to have good properties for compound curves so may also be preferred for some strip-shaped textiles. The end count in the warp direction is between 35 and 70 in one embodiment. The denier of the warp yarns is between 350 and 1200 denier in one embodiment. In one embodiment, the textile is air permeable which increases the flexibility of the divided conduit and may allow for easier movement of the strip-shaped textile within the divided conduit to change the size of the channels and make it easier to install cables in between empty channels.

In another embodiment, the strip-shaped textile is a knit, for example a circular knit, reverse plaited circular knit, double knit, single jersey knit, two-end fleece knit, three-end fleece knit, terry knit or double loop knit, weft inserted warp knit, warp knit, and warp knit with or without a micro-denier face.

In another embodiment, the strip-shaped textile is a multi-axial, such as a tri-axial fabric (knit, woven, or non-woven). In another embodiment, the strip-shaped textile is a bias fabric. In another embodiment, the strip-shaped textile is a non-woven. The term non-woven refers to structures incorporating a mass of yarns that are entangled and/or heat fused so as to provide a coordinated structure with a degree of internal coherency. Non-woven fabrics for use as the strip-shaped textile may be formed from many processes such as for example, meltspun processes, hydroentangeling processes, mechanically entangled processes, stitch-bonded and the like. In another embodiment, the strip-shaped textile is a unidirectional textile and may have overlapping yarns or may have gaps between the yarns.

The yarns making up the strip-shaped textile forming the strip-shaped substrate 200 may be any suitable yarn. "Yarn", in this application, as used herein includes a monofilament elongated body, a multifilament elongated body, ribbon, strip, fiber, tape, and the like. The term yarn includes a plurality of any one or combination of the above. The yarns may be of any suitable form such as spun staple yarn, monofilament, or multifilament, single component, bicomponent, or multi-component, and have any suitable cross-section shape such as circular, multi-lobal, square or rectangular (tape), and oval.

Some suitable materials for the yarns include polyamide, aramid (including meta and para forms), rayon, PVA (polyvinyl alcohol), polyester, polyolefin, polyvinyl, nylon (including nylon 6, nylon 6,6, and nylon 4,6), polyethylene naphthalate (PEN), cotton, steel, carbon, fiberglass, steel, polyacrylic, polytrimethylene terephthalate (PTT), polycyclohexane dimethylene terephthalate (PCT), polybutylene terephthalate (PBT), PET modified with polyethylene glycol (PEG), polylactic acid (PLA), polytrimethylene terephthalate, nylons (including nylon 6 and nylon 6,6); regenerated cellulosics (such as rayon or Tencel); elastomeric materials such as spandex; high-performance fibers such as the polyaramids, and polyimides natural fibers such as cotton, linen, ramie, and hemp, proteinaceous materials such as silk, wool, and other animal hairs such as angora, alpaca, and vicuna, fiber reinforced polymers, thermosetting polymers, blends thereof, and mixtures thereof.

In one embodiment, the yarns of the textile have a greater melting temperature than the thermoplastic polymer forming the conduit so they will not melt during the extrusion process forming the divided conduit. In another embodiment, the yarns do not have a melting temperature (such as yarns from a thermoset polymer or some natural fibers), but must be able to withstand the extrusion conditions of the conduit without significant loss in physical properties.

In one embodiment, the textile contains warp yarns and weft yarns which are monofilament. In another embodiment, the warp yarns are monofilament and the weft yarns are multi-filament. In another embodiment, the warp yarns are monofilament and the weft yarns are an alternating arrangement of monofilament and multifilament yarns. In another embodiment, the warp yarns and weft yarns are multi-filament. In another embodiment, the warp yarns are multi-filament. In another embodiment, the warp yarns are multifilament and the filling yarns are monofilament. The phrase "alternating arrangement" refers to a repeating pattern of monofilament to multifilament yarns. In one embodiment, the arrangement of monofilament to multifilament yarns is 1:1. Other ratios, such as 1:2, 1:3, 2:3, 3:4, or 3:5, for example, may also be employed, as product specifications dictate. For the embodiments containing monofilament yarns, the denier of the yarns is preferably between about 200 and 800 denier. For the embodiments containing multifilament yarns, the denier of the yarns is preferably between about 200 and 1,000 denier.

The strip-shaped substrate 200 may also be a strip-shaped film. Preferably, this film is made of a thermoplastic polymer, but may also be made of any other suitable material including a thermoset. Some suitable thermoplastic polymers include, but are not limited to polypropylene, polyethylene, polyester, polyvinyl alcohol, blends thereof, and co-polymers thereof. Preferably, the film is formed from a thermoplastic selected from the group consisting of polyester, polyolefin, and polyamide. The strip-shaped film may have perforations or be continuous. Perforations will aid in breathability of the film and the flexibility of the divided conduit. Further, having perforations should allow for easier movement of the strip-shaped film within the divided conduit to change the size of the channels and make it easier to install cables in between empty channels. Further, the strip-shaped film may be fiber reinforced or not. A film containing fibers may increase the breaking strength of the film. In one embodiment, at least one of the surfaces of the strip-shaped film has a textured surface. One example of a textured surface is an "orange peel" finish. This textured surface may serve to reduce the coefficient of friction and allow for easier insertion of cables or other elongated structures.

In some embodiments, an already formed, free-standing strip-shaped film is inserted into the conduit during (or directly after) the extrusion of the pipe. In one embodiment, this strip-shaped film is oriented, meaning that after extrusion the film is further stretched in at least one axis. This orienting serves to increase the dimensional stability and strength of the film to be placed into the conduit. In one embodiment, the polymer that the film is made of has a higher melting temperature than the polymer used to form the conduit. In another embodiment, the film does not have a melting temperature (such as thermoset polymer). In this embodiment, the film must be able to withstand the extrusion conditions of the conduit without significant loss in physical properties. During the manufacturing processes, the already formed, freestanding strip-shaped film is introduced into the conduit during or directly after extrusion of the conduit and the film must not lose significant physical properties during this process. The strip-shaped film may have chemistries added to the polymer before film formation or applied onto the formed film to provide for low friction, fire resistance, adhesion, or color. The film may contain a bumpy finish to reduce the amount of contact the film has with the cable, pull line, or other elongated structure.

While in Figure 1 there is shown the strip-shaped substrate 200 adhered to and embedded into the inner wall of the conduit 100 on both the first longitudinal edge 200a and the second longitudinal edge 200b, there may be embodiments where only one edge of the strip-shaped substrate is adhered to and embedded into the inner wall of the conduit 100.

In accordance with the present invention, the longitudinal edge(s) 200a, 200b of the strip-shaped substrate 200 is/are embedded into the inner surface of the conduit. Being "embedded" means that the edges of the strip-shaped substrate are not just adhered to the surface of the inner wall by actually reside within the wall of the conduit such that the edge is completely covered, surrounded, and entrenched by the material of the conduit.

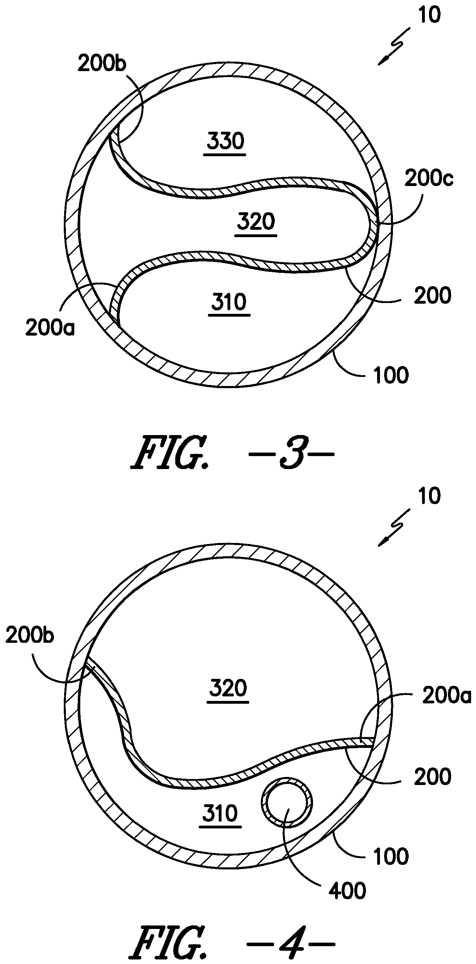

In one embodiment, the width of the strip-shaped substrate, defined as the distance between the first longitudinal edge 200a and the second longitudinal edge 200b is between about 32 and 60% of the inner circumference of the conduit. In another embodiment, the width of the strip-shaped substrate 200 is greater than the diameter of the conduit. For example, in Figure 4, there is shown another embodiment of the divided conduit a longer width of the strip-shaped substrate (or film) is beneficial as it may move towards the inner surface of the conduit into one of the chambers of the divided conduit thus opening the other (unfilled) channel for less friction and easier cable installation.

Figure 2 illustrates an additional embodiment of the invention where the divided conduit 10 contains a conduit 100 with two strip-shaped substrates 200, each strip-shaped substrates 200 having a first longitudinal edge 200a and a second longitudinal edge 200b adhered to and embedded into the inner wall of the conduit 100. This forms three channels 310, 320, 330 for the placement of cables or elongated structures. While Figure 2 is shown with two strip-shaped substrates 200, there may be embodiments having three or more strip-shaped substrates 200.

Figure 3 illustrates an additional embodiment of the invention where the divided conduit 10 contains a conduit 100 with one strip-shaped substrates 200, having a first longitudinal edge 200a and a second longitudinal edge 200b adhered to and embedded into the inner wall of the conduit 100 as well as an additional point 200c of the material (between the first edge 200a and the second edge 200b) optionally adhered to and embedded into the inner wall of the conduit 100. The additional point 200c runs along the longitudinal axis of the fabric. The conduit 100 having one strip-shaped substrate 200 forms a divided conduit having three channels 310, 320, 330.

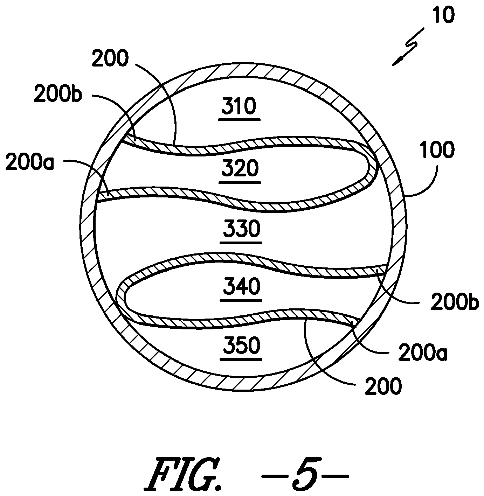

One process for forming the divided conduit begins with an already formed, free-standing, strip-shaped substrate 200. This already formed strip-shaped substrate is then introduced to the conduit extrusion process where the first and second edges 200a, 200b of the strip-shaped substrate 200 are embedded into the inner surface of the conduit 100 during the extrusion of the conduit or directly after the extrusion (while the polymer of the conduit is still above its T_{g}). In this embodiment, the materials of strip-shaped substrate (yarns for a textile or polymer for a film) preferably have a higher melting temperature than the polymer forming the conduit. In the case where the materials of the strip-shaped substrate 200 do not have a melting temperature, preferably strip-shaped substrate must be able to withstand the conduit forming (extrusion processing) conditions without a significant loss in physical properties. During the extrusion process where the conduit is formed, the strip-shaped substrate is introduced into the forming conduit while the conduit is still at least partially molten and pressed into the surface of the molten conduit with, for example, a roller or a flexible rib. This allows the edges of the strip-shaped substrate to be embedded into the material of the conduit. Multiple strip-shaped substrates can be introduced into the forming conduit resulting in multiple channels such as shown in Figures 2 and 5.

In one embodiment, there are two strip-shaped substrates introduced during the extrusion process to form a conduit having 3 channels 310, 320, and 330 such as shown in Figure 2. In another embodiment, the strip-shaped substrate 200 is inserted into the extrusion process such that the two edges (first longitudinal edge 200a and second longitudinal edge 200b) are adhered to and embedded into the inner wall of the conduit as well as another section of the strip-shaped substrate along its longitudinal axis. In this embodiment, shown in Figure 3, the first longitudinal edge 200a, second longitudinal edge 200b, and an additional point 200c are embedded into the polymer of the conduit 100. With the one strip-shaped substrate 200, 3 channels 310, 320, and 330 are
created.

In another embodiment, the conduit is formed from simultaneously extruding a first molten thermoplastic and a second molten thermoplastic. This simultaneous extrusion of the first and second polymer may be from coextrusion. The first and second thermoplastics are distinct and different polymers having different compositions, melting temperatures, and/or physical characteristics. The first thermoplastic forms the conduit and the second thermoplastic forms the strip-shaped film within the conduit. The first thermoplastic is selected from the group consisting of polyethylene, polypropylene, polyester, and polyvinyl chloride. The second thermoplastic is selected from the group consisting of polyester, polyolefin, and polyamide. In one embodiment, the second thermoplastic has a melting temperature greater than the melting temperature of the first thermoplastic. In another embodiment, the second thermoplastic polymer is the same polymer as the first thermoplastic, just thinner to allow bending of the strip-shaped film. In another embodiment, the strip-shaped film could have perforations to allow air to flow between channels allowing the strip-shaped film to move out of the way (towards the inner surface of the conduit) when a rope or cable is pulled though the conduit thus increasing the conduit cross-section which results in less friction and easier pull.

In this embodiment, the second molten thermoplastic forms a one strip-shaped substrate in the form of a strip-shaped film having a first longitudinal edge and a second longitudinal edge embedded into the first thermoplastic of the conduit forming two channels. In another embodiment, the second molten thermoplastic forms 2 strip-shaped substrates forming 3 channels. In another embodiment, the second molten thermoplastic forms at least 3 strip-shaped substrates, each having at least one of the edges embedded into the first thermoplastic of the conduit.

The divided conduit may optionally contain pull lines or cords. These may be placed inside the conduit in at least one channel during manufacture of the divided conduit, after conduit formation, or after conduit placement. Pull lines, which are typically tightly woven, relatively flat strips of material, may be used for pulling cables through the channels. However, pull cords having a substantially round cross-section may be used successfully with smaller diameter cables.

In one embodiment, the pull lines are formed of tightly woven, polyester material, which exhibits a tensile strength of between about 181 and about 1360 kgf (about 400 pounds and about 3000 pounds).

In an alternate embodiment, a twisted round rope (for example, a multi-ply cord) may be used, where such pull cords are made of polypropylene, polyester, and the like.

The divided conduit is designed to contain cables or other elongated objects. These may be placed inside the conduit in at least one channel during manufacture of the divided conduit, after conduit formation, or after conduit placement.

## Claims

1. A divided conduit (10) comprising:
a thermoplastic conduit (100) having an inner and outer surface, and
at least one strip-shaped substrate (200) having a first longitudinal edge (200a) and a second longitudinal edge (200b), wherein the substrate is selected from the group consisting of a strip-shaped textile and a strip-shaped film,
**characterized in that**
at least one of the first longitudinal and second longitudinal edges (200a, b) of the strip-shaped substrate (200) is embedded into the thermoplastic material of the thermoplastic conduit (100) and resides within the inner surface (100a) of the conduit (100) forming at least two flexible, longitudinal channels (310, 320, 330) for enveloping cables.

2. The divided conduit (10) of claim 1, wherein the divided conduit (10) comprises at least two strip-shaped textiles (200) each having a first longitudinal edge (200a) and a second longitudinal edge (200b), wherein at least one of the first longitudinal and second longitudinal edges (200a, b) of the strip-shaped textiles (200) is embedded into the inner surface (100a) of the conduit (100) forming at least three flexible, longitudinal channels (310, 320, 330) for enveloping cables.

3. The divided conduit (10) of claim 1, wherein the strip-shaped substrate is a strip-shaped textile (200) which is selected from the group consisting of a woven, non-woven, and knit.

4. The divided conduit (10) of claim 1, wherein the strip-shaped substrate is a strip-shaped textile (200) which comprises yarns having a melting temperature greater than the melting temperature of the thermoplastic of the conduit (100).

5. The divided conduit (10) of claim 1, wherein the strip-shaped substrate (200) is a strip-shaped film which has a melting temperature greater than the melting temperature of the thermoplastic polymer of the conduit (100).

6. A method of producing a divided conduit (10) comprising, in order:
forming a strip-shaped substrate (200) having a first longitudinal edge (200a) and a second longitudinal edge (200b), wherein the substrate is selected from the group consisting of a strip-shaped textile and a strip-shaped film; and,
extruding a molten thermoplastic polymer into the form of a conduit (100) and placing at least one strip-shaped substrate (200) within the extruded conduit (100) during or directly after conduit formation,
**characterized in that**
at least one of the first longitudinal and second longitudinal edges (200a, b) of the strip-shaped substrate (200) embeds into the thermoplastic material of the thermoplastic conduit (100) and resides within the inner surface (100a) of the conduit (100).

7. The method of claim 6, wherein the distance between the first longitudinal and second longitudinal edge (200b) of the strip-shaped substrate (200) is greater than the inside diameter of the conduit (100).

8. The method of claim 6 wherein at least two strip-shaped substrates (200) are placed within the conduit (100) during or directly after formation.

9. The method of claim 6, wherein the strip-shaped substrate (200) is a strip-shaped textile selected from the group consisting of a woven strip-shaped textile, a non-woven strip-shaped textile, a knit strip-shaped textile, and a strip-shaped film.

10. The method of claim 6, wherein the strip-shaped substrate (200) comprises a polymer having a melting temperature greater than the melting temperature of the thermoplastic polymer of the conduit (100).

11. A method of producing a divided conduit (10) comprising;
simultaneously extruding a first molten thermoplastic into the form of a conduit (100) and a second molten thermoplastic into a strip-shaped film within the conduit (100), wherein the strip-shaped film has a first longitudinal edge (200a) and a second longitudinal edge (200b),
**characterized in that**
at least one of the first longitudinal and second longitudinal edges (200a, b) of the strip-shaped film is embedded into the thermoplastic material of the thermoplastic conduit (100) and resides within the conduit (100), wherein the first thermoplastic and the second thermoplastic are different polymers.

12. The method of claim 11, wherein the first thermoplastic has a melting temperature lower than the melting temperature of the second thermoplastic.

## Patentansprüche

1. Geteilte Leitung (10), umfassend:
eine thermoplastische Leitung (100), die eine Innen- und Außenfläche aufweist und
mindestens ein streifenförmiges Substrat (200), das eine erste Längskante (200a) und eine zweite Längskante (200b) aufweist, wobei das Substrat ausgewählt ist aus der Gruppe bestehend aus einem streifenförmigen Textil und einem streifenförmigen Film,
**dadurch gekennzeichnet, dass**
mindestens eine der ersten Längs- und zweiten Längskanten (200a, b) des streifenförmigen Substrats (200) in das thermoplastische Material der thermoplastischen Leitung (100) eingebettet ist und innerhalb der Innenfläche (100a) der Leitung (100) liegt, die mindestens zwei flexible, längliche Kanäle (310, 320, 330) zum Umhüllen von Kabeln bildet.

2. Geteilte Leitung (10) nach Anspruch 1, wobei die geteilte Leitung (10) mindestens zwei streifenförmige Textilien (200) umfasst, die jeweils eine erste Längskante (200a) und eine zweite Längskante (200b) aufweisen, wobei mindestens eine der ersten Längs- und zweiten Längskanten (200a, b) der streifenförmigen Textilien (200) in die Innenfläche (100a) der Leitung (100) eingebettet ist und mindestens drei flexible längliche Kanäle (310, 320, 330) zum Umhüllen von Kabeln bildet.

3. Geteilte Leitung (10) nach Anspruch 1, wobei das streifenförmige Substrat ein streifenförmiges Textil (200) ist, das aus der Gruppe ausgewählt ist bestehend aus einem gewebten, nicht gewebten und gewirkten Material.

4. Geteilte Leitung (10) nach Anspruch 1, wobei das streifenförmige Substrat ein streifenförmiges Textil (200) ist, das Garne umfasst, die eine Schmelztemperatur aufweisen, die größer ist als die Schmelztemperatur des Thermoplastes der Leitung (100).

5. Geteilte Leitung (10) nach Anspruch 1, wobei das streifenförmige Substrat (200) ein streifenförmiger Film ist, der eine Schmelztemperatur aufweist, die größer ist als die Schmelztemperatur des thermoplastischen Polymers der Leitung (100).

6. Verfahren zur Herstellung einer geteilten Leitung (10), umfassend in der Reihenfolge:
Bilden eines streifenförmigen Substrats (200), das eine erste Längskante (200a) und eine zweite Längskante (200b) aufweist, wobei das Substrat ausgewählt ist aus der Gruppe bestehend aus einem streifenförmigen Textilmaterial und einem streifenförmigen Film; und,
Extrudieren eines geschmolzenen thermoplastischen Polymers in die Form einer Leitung (100) und Platzieren von mindestens einem streifenförmigen Substrat (200) innerhalb der extrudierten Leitung (100) während oder unmittelbar nach der Leitungsbildung,
**dadurch gekennzeichnet, dass**
mindestens eine der ersten Längs- und zweiten Längskanten (200a, b) des streifenförmigen Substrats (200) in das thermoplastische Material der thermoplastischen Leitung (100) eingebettet ist und innerhalb der Innenfläche (100a) der Leitung (100) liegt.

7. Verfahren nach Anspruch 6, wobei der Abstand zwischen der ersten Längs- und der zweiten Längskante (200b) des streifenförmigen Substrats (200) größer ist als der Innendurchmesser der Leitung (100).

8. Verfahren nach Anspruch 6, wobei mindestens zwei streifenförmige Substrate (200) während oder unmittelbar nach der Bildung innerhalb der Leitung (100) platziert werden.

9. Verfahren nach Anspruch 6, wobei das streifenförmige Substrat (200) ein streifenförmiges Textil ist, ausgewählt aus der Gruppe bestehend aus einem gewebten streifenförmigen Textil, einem nicht gewebten streifenförmigen Textil, einem gewirkten streifenförmigen Textil und einem streifenförmigen Film.

10. Verfahren nach Anspruch 6, wobei das streifenförmige Substrat (200) ein Polymer umfasst, das eine Schmelztemperatur aufweist, die größer ist als die Schmelztemperatur des thermoplastischen Polymers der Leitung (100).

11. Verfahren zur Herstellung einer geteilten Leitung (10), umfassend:
gleichzeitiges Extrudieren eines ersten geschmolzenen Thermoplasts in die Form einer Leitung (100) und eines zweiten geschmolzenen Thermoplasts zu einem streifenförmigen Film innerhalb der Leitung (100), wobei der streifenförmige Film eine erste Längskante (200a) und eine zweite Längskante (200b) aufweist,
**dadurch gekennzeichnet, dass**
mindestens eine der ersten Längs- und zweiten Längskanten (200a, b) des streifenförmigen Films in das thermoplastische Material der thermoplastischen Leitung (100) eingebettet ist und innerhalb der Leitung (100) liegt, wobei der erste Thermoplast und der zweite Thermoplast unterschiedliche Polymere sind.

12. Verfahren nach Anspruch 11, wobei der erste Thermoplast eine Schmelztemperatur aufweist, die niedriger ist als die Schmelztemperatur des zweiten Thermoplasts.

## Revendications

1. Conduit divisé (10) comprenant:
un conduit thermoplastique (100) ayant des surfaces interne et externe, et
au moins un substrat en forme de bande (200) ayant un premier bord longitudinal (200a) et un second bord longitudinal (200b), dans lequel le substrat est choisi dans le groupe consistant en un textile en forme de bande et un film en forme de bande,
**caractérisé en ce**
**qu'**au moins l'un des premier et second bords longitudinaux (200a, b) du substrat en forme de bande (200) est enfoui dans le matériau thermoplastique du conduit thermoplastique (100) et réside dans la surface interne (100a) du conduit (100) en formant au moins deux canaux longitudinaux flexibles (310, 320, 330) pour envelopper des câbles.

2. Conduit divisé (10) selon la revendication 1, dans lequel le conduit divisé (10) comprend au moins deux textiles en forme de bande (200) ayant chacun un premier bord longitudinal (200a) et un second bord longitudinal (200b), au moins l'un des premiers et seconds bords longitudinaux (200a, b) des textiles en forme de bande (200) est enfoui dans la surface interne (100a) du conduit (100) en formant au moins trois canaux longitudinaux flexibles (310, 320, 330) pour envelopper des câbles.

3. Conduit divisé (10) selon la revendication 1, dans lequel le substrat en forme de bande est un textile en forme de bande (200) qui est choisi dans le groupe constitué d'un tissé, d'un non-tissé et d'un tricot.

4. Conduit divisé (10) selon la revendication 1, dans lequel le substrat en forme de bande est un textile en forme de bande (200) qui comprend des fils ayant une température de fusion supérieure à la température de fusion du thermoplastique du conduit (100).

5. Conduit divisé (10) selon la revendication 1, dans lequel le substrat en forme de bande (200) est un film en forme de bande qui a une température de fusion supérieure à la température de fusion du polymère thermoplastique du conduit (100).

6. Procédé de production d'un conduit divisé (10) comprenant, dans l'ordre:
la formation d'un substrat en forme de bande (200) ayant un premier bord longitudinal (200a) et un second bord longitudinal (200b), dans lequel le substrat est choisi dans le groupe consistant en un textile en forme de bande et un film en forme de bande ; et,
l'extrusion d'un polymère thermoplastique fondu sous la forme d'un conduit (100) et placer au moins un substrat en forme de bande (200) dans le conduit extrudé (100) pendant ou directement après une formation de conduit,
**caractérisé en ce**
**qu'**au moins un des premier et second bords longitudinaux (200a, b) du substrat en forme de bande (200) pénètre dans le matériau thermoplastique du conduit thermoplastique (100) et se trouve dans la surface interne (100a) du conduit (100).

7. Procédé selon la revendication 6, dans lequel la distance entre les premier et second bords longitudinaux (200b) du substrat en forme de bande (200) est supérieure au diamètre intérieur du conduit (100).

8. Procédé selon la revendication 6, dans lequel au moins deux substrats en forme de bande (200) sont placés dans le conduit (100) pendant ou directement après la formation.

9. Procédé selon la revendication 6, dans lequel le substrat en forme de bande (200) est un textile en forme de bande choisi dans le groupe consistant en un textile en forme de bande tissé, un textile en forme de bande non tissé, un textile en bande tricoté, et un film en forme de bande.

10. Procédé selon la revendication 6, dans lequel le substrat en forme de bande (200) comprend un polymère ayant une température de fusion supérieure à la température de fusion du polymère thermoplastique du conduit (100).

11. Procédé de production d'un conduit divisé (10) comprenant ;
l'extrusion simultanée d'un premier thermoplastique fondu sous la forme d'un conduit (100) et d'un second thermoplastique fondu en un film en forme de bande dans le conduit (100), le film en forme de bande ayant un premier bord longitudinal (200a) et un second bord longitudinal (200b),
**caractérisé en ce**
**qu'**au moins un des premiers bords longitudinaux et des seconds bords longitudinaux (200a, b) du film en forme de bande est enfoui dans le matériau thermoplastique du conduit thermoplastique (100) et se trouve à l'intérieur du conduit (100), dans lequel le premier thermoplastique et le second thermoplastique sont des polymères différents.

12. Procédé selon la revendication 11, dans lequel le premier thermoplastique a une température de fusion inférieure à la température de fusion du second thermoplastique.
